(19) Europäisches Patentamt
European Patent Office
Office européen des brevets

(11) **EP 3 169 585 B1**

(12) **FASCICULE DE BREVET EUROPEEN**

(45) Date de publication et mention
de la délivrance du brevet:
**17.04.2019 Bulletin 2019/16**

(21) Numéro de dépôt: **15727956.3**

(22) Date de dépôt: **04.06.2015**

(51) Int Cl.:
**B64C 23/00** *(2006.01)*     **B64C 27/04** *(2006.01)*

(86) Numéro de dépôt international:
**PCT/EP2015/062519**

(87) Numéro de publication internationale:
**WO 2016/008639 (21.01.2016 Gazette 2016/03)**

(54) **POUTRE DE QUEUE DE GIRAVION, ET GIRAVION**

HUBSCHRAUBERHECKAUSLEGER SOWIE HUBSCHRAUBER MIT EINEM DERARTIGEN AUSLEGER

HELICOPTER TAILBOOM AND HELICOPTER COMPRISING SUCH A BOOM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2014 FR 1401589**

(43) Date de publication de la demande:
**24.05.2017 Bulletin 2017/21**

(73) Titulaire: **Airbus Helicopters**
**13725 Marignane Cedex (FR)**

(72) Inventeurs:
• **LEUSINK, Debbie**
**F-13290 Aix en Provence (FR)**
• **ALFANO, David**
**F-13090 Aix en Provence (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 690 008       RU-C1- 2 281 227**
**US-A- 3 419 232        US-A- 3 544 047**
**US-A- 4 708 305        US-A- 5 209 430**
**US-A1- 2002 079 405    US-A1- 2014 166 804**

**Description**

La présente invention concerne une poutre de queue d'un giravion, et un giravion muni de cette poutre de queue.

Un giravion comprend classiquement au moins un rotor qualifié de « rotor principal ». Un tel rotor principal a notamment pour fonction d'assurer au moins partiellement la sustentation voire la propulsion de ce giravion.

En outre, un giravion peut comporter au moins un rotor qualifié de « rotor secondaire ». Un tel rotor secondaire a notamment pour fonction de contrôler le mouvement en lacet de ce giravion.

Ainsi le giravion comporte une cellule centrale portant un rotor principal. Cette cellule centrale est alors prolongée par une poutre de queue qui s'étend longitudinalement vers l'arrière du giravion pour porter des plans aérodynamiques permettant d'assurer la stabilité de l'appareil, ainsi que le cas échéant, un rotor secondaire. Plus précisément, la poutre de queue porte une dérive, le rotor secondaire étant soit porté par la dérive soit agencé au sein de cette dérive dans le cadre d'un fenestron®. Dans cette configuration, le rotor secondaire est parfois plus simplement dénommé « rotor arrière » compte tenu de sa localisation.

De manière alternative, la poutre de queue est munie d'un dispositif de contrôle du mouvement en lacet du giravion dépourvu de rotor arrière.

La poutre de queue s'étend donc longitudinalement sur une longueur maximale, sensiblement le long d'un plan antéropostérieur de symétrie du giravion.

De plus, la poutre de queue s'étend sur une hauteur maximale selon une direction en élévation, et plus précisément de haut en bas d'une portion supérieure en regard du rotor principal vers une portion inférieure en regard du sol.

Enfin, la poutre de queue s'étend latéralement selon une épaisseur maximale en s'étirant d'un premier flanc vers un deuxième flanc.

Dès lors, la longueur maximale de la poutre de queue est généralement supérieure à sa hauteur maximale et à son épaisseur maximale. En outre, la hauteur maximale de la poutre de queue est généralement supérieure à son épaisseur maximale.

Par suite, la poutre de queue est parfois assimilable à une aile épaisse. En effet, l'épaisseur relative de la poutre de queue est souvent importante et supérieure à 0,2, cette épaisseur relative correspondant au quotient de l'épaisseur maximale et de la hauteur maximale.

Cette épaisseur relative est importante pour conférer à la poutre de queue une résistance mécanique et un placement modal suffisant afin de porter la dérive et le rotor secondaire.

De plus, une telle épaisseur relative élevée permet de réduire la traînée de la poutre de queue lorsque le giravion se déplace latéralement.

En effet, une épaisseur relative élevée permet d'obtenir une poutre de queue présentant une surface suffisamment importante pour induire une raideur en flexion intéressante, sans générer une traînée trop importante durant une translation latérale.

Cependant, le flux d'air traversant le rotor principal peut impacter en vol la portion supérieure de la poutre de queue. Ce flux d'air traversant le rotor principal est dénommé plus simplement « flux d'air » par la suite.

Cette portion supérieure comporte alors le bord d'attaque de cette poutre de queue, au regard du flux d'air. A l'inverse, le bord de fuite est présent dans la portion inférieure. Autrement dit, le bord d'attaque d'un profil de la poutre de queue représente le point le plus haut du profil selon une direction en élévation, le bord de fuite du profil représentant la partie basse du profil selon cette direction en élévation.

Dès lors, ce flux d'air impacte notamment la poutre de queue durant une phase de vol stationnaire ou encore lors d'une phase de vol en montée.

De même, ce flux d'air impacte la poutre de queue durant des phases de vol à de faibles vitesses. Dans ces phases, les vitesses de l'air dues au mouvement de l'aéronef ne sont pas suffisantes pour éviter que le souffle du rotor principal ne touche pas la poutre de queue.

Ce flux d'air impacte alors la portion supérieure de la poutre de queue et se scinde pour contourner la poutre de queue en deux flux d'air. Ces deux flux d'air peuvent se décoller de la poutre de queue, notamment au niveau de la zone de la poutre de queue présentant l'épaisseur la plus importante transversalement à la direction de l'écoulement. Cette séparation induit la création d'un sillage important.

Par suite, la poutre de queue génère une traînée importante selon une direction en élévation, cette traînée étant dite « déportance » par la suite.

Cette déportance tend à déplacer le fuselage de l'aéronef vers le bas, et s'avère donc pénalisante. En effet, cette déportance élevée peut tendre à réduire la vitesse de montée du giravion, et surtout la charge utile de ce giravion.

La modification d'une poutre de queue existante pour remédier à ce problème peut s'avérer difficile à réaliser.

Par exemple, la modification de la poutre de queue existante ne doit pas, si possible, générer un comportement non linéaire des mouvements du giravion. Une telle modification ne doit pas non plus nuire à la qualité de vol du giravion.

En outre, la modification de la poutre de queue existante ne doit pas, si possible, générer une traînée accrue selon une direction latérale, pour ne pas dégrader de manière conséquente le comportement du giravion durant un vol latéral. L'ajout d'une excroissance en élévation paraît donc délicat.

Par ailleurs, la modification d'une poutre de queue ne doit pas dégrader sa faculté à porter des ensembles lourds, et en particulier une dérive et un rotor secondaire. La modification d'une poutre par l'ajout d'orifices peut alors être problématique pour la résistance structurelle de la poutre, ainsi que pour le placement modal associé.

De même, l'ajout de surfaces pesantes peut modifier le centrage du giravion.

Une modification structurale d'une poutre de queue peut aussi modifier son comportement dynamique en risquant d'induire des problèmes vibratoires voire des résonances indues.

Dès lors, minimiser la déportance d'une poutre de queue selon une direction en élévation peut s'avérer difficile compte tenu de multiples contraintes.

L'arrière-plan technologique éloigné de la problématique de l'invention comprend des documents tendant à obtenir un effet anticouple à l'aide la poutre de queue.

Le document US 8,074,920 décrit une poutre de queue munie d'un renfort sur sa portion supérieure. De plus, la poutre de queue porte des ailes sur sa portion inférieure pour diriger latéralement le flux d'air. Ce document US 8,074,920 vise ainsi une poutre de queue tendant à contrecarrer le couple induit sur le fuselage du giravion par un rotor principal.

Le document EP 524,044 décrit une poutre de queue intégrant un dispositif anticouple. Ce dispositif est muni de fentes ménagées dans la poutre de queue et alimentées en fluide sous pression par une machine soufflante.

De même, le document US 6, 352, 220 décrit une poutre de queue définissant un passage d'air.

Le document US 4,708,305 présente une poutre de queue munie d'un déviateur supérieur et d'un déviateur inférieur pour minimiser le dimensionnement d'organes conventionnels anticouple.

De plus, le document US 2014/0166804 décrit deux saillies disposées sur un flanc d'une poutre de queue pour agir sur l'effort latéral généré par la poutre de queue.

De même, le document US 5,209,430 présente une poutre de queue visant à améliorer le contrôle en lacet de l'aéronef. Cette poutre est munie d'un déviateur supérieur du côté de l'aéronef dans lequel évolue une pale reculante, et d'un déviateur inférieur du côté de l'aéronef dans lequel évolue une pale avançante.

En effet, une pale se déplaçant selon le sens d'avancement vers l'avant de l'aéronef est dite « pale avançante », alors qu'une pale se déplaçant selon le sens contraire au sens d'avancement est dite « pale reculante ». Chaque pale représente donc successivement durant sa rotation une pale avançante puis une pale reculante.

Le sens d'avancement vers l'avant correspond à la direction d'avancement de l'aéronef. Cette direction d'avancement s'étend alors de l'arrière de l'aéronef vers le nez de l'aéronef.

Ces documents US 4,708,305 et US 5,209,430 visent ainsi à générer un effort latéral, et non pas à traiter la déportance de la poutre de queue selon une direction en élévation.

Par ailleurs, on connaît aussi le document NASA TP3233 "two-dimensional aerodynamic characteristics of several polygon-shaped cross-sectional models applicable to helicopter fuselages", H.L. Kelley, C.A. Crowelt, J.C. Wilson, 1992.

Ce document décrit des sections diverses de poutre de queue testées dans une soufflerie pour déterminer leurs traînées vers le bas et les efforts générés latéralement.

En outre, une poutre de queue peut porter des moyens de stabilisation en tangage. Par exemple, le document US 2005/0279879 présente une telle poutre de queue.

Le document RU 2281227 décrit une poutre de queue munie de deux lames pour créer un effort latéral.

Le document WO 2012/039702 présente une poutre de queue fine profilée munie d'un volet pour générer un effort latéral.

De manière générale, une telle poutre de queue présentant un rapport d'épaisseur faible peut tendre à vibrer.

De plus, la hauteur d'une telle poutre de queue peut s'avérer plus importante que la hauteur d'une poutre de queue présentant un rapport d'épaisseur élevé. Dès lors, la poutre de queue peut générer des difficultés lors d'une translation latérale de l'aéronef.

Le document US 2002/079405 est aussi connu.

La présente invention a alors pour objet de proposer une poutre de queue visant à posséder des caractéristiques aérodynamiques améliorées par rapport à certaines poutres de queue connues, et notamment une poutre de queue tendant à améliorer les performances d'un aéronef durant une phase de vol stationnaire ou une phase de vol en montée en générant une déportance réduite. En outre, l'invention vise aussi à pouvoir être implémentée sur certaines poutres de queue existantes durant une étape de rénovation dite « retrofit » en langue anglaise.

Selon l'invention, une poutre de queue est munie d'une structure allongée s'étendant selon une direction longitudinale sur une distance dite « longueur » le long d'un plan antéropostérieur de symétrie de la structure allongée.

La poutre de queue s'étend de plus en élévation d'une portion haute incluant un bord d'attaque en regard d'un rotor de sustentation d'un giravion vers une portion basse en regard du sol lorsque ce giravion repose sur le sol. En particulier, la structure allongée s'étend de haut en bas d'un sommet vers un culot comprenant une surface plane.

Cette poutre de queue comporte au moins une protubérance prolongeant vers le bas ledit culot pour diminuer la déportance de la poutre de queue, chaque protubérance étant solidaire de la structure de cette poutre de queue en s'étendant sous cette structure selon la direction longitudinale, aucun passage d'air séparant la protubérance de cette structure, au moins une voire chaque section de la poutre de queue contenue dans un plan vertical orthogonal à la direction longitudinale présentant :

- une tranche de la structure dite « tranche principale » qui s'étend en élévation vers le bas du sommet vers le culot sur une distance atteignant un maximum dénommé « hauteur maximale », et qui s'étend latéralement d'un deuxième flanc vers un premier flanc sur une distance atteignant un maximum dénommé « épaisseur maximale »,

- une tranche de chaque protubérance dite « tranche d'extension » étant accolée à une zone inférieure de ladite structure, ladite zone inférieure s'étendant en élévation vers le haut à partir de ladite face plane sur une hauteur dite « hauteur inférieure » qui est inférieure à 15 % de la hauteur maximale, la tranche d'extension s'étendant en élévation vers le bas sur une distance atteignant un maximum dénommé « hauteur d'extension » et latéralement sur une distance atteignant un maximum dénommé « épaisseur d'extension », ladite hauteur d'extension étant comprise entre 0.05 fois l'épaisseur maximale inclus et 0.5 fois l'épaisseur maximale inclus de cette section, ladite épaisseur d'extension étant comprise entre 0 exclu et 0.4 fois l'épaisseur maximale inclus de cette section.

On entend par «0 .05 fois l'épaisseur maximale inclus », « 0.5 fois l'épaisseur maximale inclus » que ladite hauteur maximale peut atteindre ces produits. De même, l'épaisseur d'extension peut être égale à 0.4 fois l'épaisseur maximale d'une section. A l'inverse, l'expression « ladite épaisseur d'extension étant comprise entre 0 exclu » signifie que cette épaisseur d'extension est non nulle.

Chaque protubérance est solidaire de la structure au sens ou la protubérance est attachée soit à la structure soit à une partie constitutive de la structure.

Par commodité, on partage géométriquement la structure en élévation en une zone supérieure et une zone inférieure. La zone inférieure s'étend en élévation sur au plus 15% de la hauteur maximale de la structure, la zone supérieure s'étendant en élévation sur au moins 85% de la hauteur maximale.

On nomme dans ce contexte « zone supérieure » la zone d'une section matérialisant la portion haute de la poutre de queue, et « zone inférieure » la zone d'une section matérialisant au moins partiellement la portion basse de la poutre de queue.

Chaque point dit « point supérieur » de la périphérie d'une zone supérieure se trouve à l'aplomb d'un point dit « point inférieur » de la périphérie d'une zone inférieure selon une direction en élévation parallèle au plan antéropostérieur. Un point supérieur est alors séparé du point inférieur correspondant par une hauteur. La hauteur maximale représente alors la hauteur la plus importante de la section.

De manière générale, on appelle « hauteur » la dimension d'un corps selon une telle direction en élévation parallèle ou confondu au plan antéropostérieur.

De même, la poutre de queue s'étend de part et d'autre du plan antéropostérieur de sa structure allongée, ce plan antéropostérieur séparant un premier flanc d'un deuxième flanc de la poutre de queue.

Chaque point dit « premier point » de la périphérie du premier flanc se trouve séparé par une épaisseur d'un point dit « deuxième point » de la périphérie du deuxième flanc selon une direction transversale orthogonale au plan antéropostérieur. L'épaisseur maximale représente alors l'épaisseur la plus importante de la section.

De manière générale, on appelle « épaisseur » la dimension d'un corps selon une telle direction transversale orthogonale au plan antéropostérieur.

Ces bases étant établies, une poutre de queue usuelle tend à générer une déportance pénalisante.

L'invention propose d'adjoindre à une telle poutre de queue au moins une protubérance ayant des dimensions spécifiques. La protubérance prolonge localement vers le bas la périphérie de la zone inférieure de la structure allongée.

Chaque protubérance permet alors de manière étonnante de contrôler de manière efficace le flux d'air provenant d'un rotor de sustentation et impactant la poutre de queue. Chaque protubérance peut notamment limiter un phénomène de battement du flux d'air en aval de la poutre de queue.

Chaque protubérance tend alors à réduire l'intensité et les dimensions du sillage du flux d'air en aval de la poutre de queue. Le terme « aval » est à considérer au regard du sens de circulation du flux d'air provenant du rotor de sustentation.

Dès lors, l'adjonction d'au moins une protubérance de dimensions réduites en aval de la structure allongée de la poutre de queue diminue la déportance de la poutre de queue. On note que chaque protubérance n'est donc pas assimilable aux déflecteurs tendant à générer un effet anticouple. En particulier, chaque protubérance de l'invention est localisée sous la structure allongée en étant accolée à une zone inférieure de cette structure. A l'inverse, le document RU 2281227 décrit par exemple deux déflecteurs en forme de lames respectivement agencées sous une structure et contre un flanc d'une structure pour générer un effort latéral. Les protubérances de l'invention sont donc agencées dans des endroits particuliers pour uniquement limiter la déportance de la poutre de queue.

Cet effet bénéfique n'était pourtant pas évident. Chaque protubérance tend effectivement à augmenter la masse de la poutre de queue. Toutefois, les dimensions réduites de cette protubérance limite cette augmentation de masse. En outre, les bénéfices apportés par la protubérance peuvent tendre à compenser une telle augmentation de masse.

Par ailleurs, l'adjonction d'une protubérance à la poutre de tend naturellement à augmenter la traînée de la poutre de queue durant une phase de vol latéral alors qu'au contraire la structure allongée présente une forme visant à minimiser cette traînée. Cette adjonction est alors considérée au premier abord comme étant pénalisante. Néanmoins, les dimensions restreintes de la protubérance tendent à limiter un tel impact négatif.

Si des préjugés tendent donc à indiquer que l'adjonction d'une protubérance n'a pas lieu d'être, l'adjonction d'une protubérance munie de dimensions spécifiques tend à présenter des avantages compensant ces inconvénients.

Par ailleurs, chaque protubérance peut être ajoutée sur des giravions existants.

La poutre de queue peut de plus comporter une ou plusieurs des caractéristiques qui suivent.

Ainsi, chaque tranche principale peut présenter une épaisseur relative supérieure ou égale à 0.5, ladite épaisseur relative étant égale à un quotient de ladite épaisseur maximale et de ladite hauteur maximale.

Cette épaisseur relative peut notamment permettre à la poutre de queue de porter des ensembles lourds. De plus, les vibrations d'une telle structure peuvent tendre à être réduites.

Toutefois, une poutre de queue ayant de telles dimensions peut être à l'origine d'une déportance importante lors d'une phase de vol d'avancement par exemple. Toutefois, chaque protubérance permet de réduire cette déportance.

L'adjonction d'au moins une protubérance selon l'invention à une structure de forte épaisseur permet alors d'obtenir en synergie une poutre de queue présentant de multiples intérêts.

Selon une variante, au moins une protubérance est solidaire de la structure, la structure et la protubérance appartenant à une même enveloppe structurelle.

Le terme « enveloppe » désigne une pièce mécanique.

La protubérance est ainsi une partie intégrante de la structure de la poutre de queue obtenue par des techniques usuelles de fabrication, à l'aide d'un moule par exemple dans le cas d'utilisation de matériaux composites.

Selon une autre variante, au moins une protubérance est fixée à la poutre de queue par des moyens usuels, tels que des rivets ou de la colle par exemple.

Selon une autre variante, au moins une protubérance est liée à la structure par un système de fixation, ledit système de fixation comprenant un moyen de déplacement en élévation pour masquer ladite protubérance sur requête dans ladite structure dans une position dite « position rentrée » et pour sortir ladite protubérance sur requête en dehors de ladite structure dans une position dite « position sortie », ladite protubérance saillant de ladite structure selon une hauteur égale à ladite hauteur d'extension dans ladite position sortie.

La protubérance peut alors être sortie en dehors de la structure lorsque l'apport de cette protubérance s'avère intéressant. A l'inverse, la protubérance peut être rentrée dans la structure, lorsque son apport peut être pénalisant.

On comprend que l'on entend par l'expression « aucun passage d'air séparant la protubérance de cette structure », le fait que le flux d'air provenant d'un rotor ne peut pas circuler entre la protubérance et la structure notamment dans la position sortie.

Le système de fixation peut comporter une unité de traitement reliée à un système de mesure déterminant une phase de vol, l'unité de traitement exécutant des instructions stockées dans une mémoire non volatile pour positionner automatiquement la protubérance dans la position rentrée au sol et durant une phase de vol latéral.

Le système de fixation peut alors comprendre au moins un moyen de déplacement pour déplacer la protubérance. Le moyen de déplacement peut inclure au moins un organe moteur, tel qu'un moteur électrique ou un vérin par exemple.

L'unité de traitement peut comporter un processeur ou un moyen équivalent relié au système de mesure et au moyen de déplacement. L'unité de traitement génère alors un ordre donné au moyen de déplacement pour placer la protubérance dans la position mémorisée correspondant à la phase de vol courante.

La détermination d'un ordre de sortie d'au moins une protubérance peut être déterminée à l'aide d'informations physiques diverses.

Ainsi, un tel système de mesure peut inclure un système anémométrique permettant la détermination de la vitesse de l'aéronef, et un système de contrôle relié à des commandes de vol tel qu'un système dénommé « Aircraft Flight Control System » en langue anglaise.

De manière alternative ou complémentaire, le système de fixation peut comporter un moyen de manoeuvre pour requérir manuellement le déplacement de la protubérance.

Un pilote requiert alors le déplacement de la protubérance si nécessaire.

Par ailleurs, au moins une protubérance peut avoir dans chaque section la forme d'une courbe de Gauss.

La protubérance peut avoir alternativement dans chaque section la forme d'une sinusoïde, d'un triangle ou d'un rectangle. Dans le cadre d'un rectangle, les coins de la protubérance peuvent éventuellement être arrondis.

La hauteur d'extension de ladite protubérance est variable le long de la longueur de ladite structure.

Cette caractéristique limite ponctuellement la hauteur de la protubérance, de manière à limiter la traînée latérale de la poutre de queue durant un vol en translation latérale.

Les sections de la protubérance présentent par exemple des dimensions variant selon un coefficient de proportionnalité.

La variation de hauteur peut être réalisée en appliquant un coefficient de proportionnalité variable conférant à la protubérance une forme triangulaire ou sinusoïdale, vue de côté.

En outre, le culot de la zone inférieure comporte une surface plane, la protubérance s'étendant en élévation à partir de ladite surface plane.

Un tel culot présente l'avantage d'optimiser les caractéristiques aérodynamiques de la poutre de queue.

Par ailleurs, la poutre de queue peut comporter deux protubérances, décalées latéralement. Chaque protubérance peut alors comporter une surface dite « surface externe » prolongeant un flanc de la structure et une surface dite « surface interne » reliée à ladite surface plane.

Chaque protubérance est alors placée de manière optimisée pour minimiser la déportance générée par la poutre de queue.

Eventuellement, la poutre de queue comportant deux protubérances, les protubérances sont disposées latéralement l'une en regard de l'autre ainsi que de part et d'autre dudit plan antéropostérieur.

Outre une poutre de queue, l'invention vise un aéronef muni d'une cellule centrale portant au moins un rotor de sustentation portant une pluralité de pales, cette cellule centrale étant prolongée par une poutre de queue s'étendant le long d'un plan antéropostérieur de symétrie d'une structure de la poutre de queue voire de la cellule centrale. La poutre de queue est alors du type décrit précédemment.

Par ailleurs, lorsque la poutre de queue comporte une unique protubérance, le plan antéropostérieur séparant transversalement un premier côté et un deuxième côté de l'aéronef, chaque pale se trouvant dans une position de « pale avançante » lorsque cette pale évolue dans le premier côté et se trouvant dans une position de « pale reculante » lorsque cette pale évolue dans le deuxième côté, la protubérance peut être située dans le premier côté.

La protubérance est alors favorablement disposée du côté de l'aéronef ou apparaissent des perturbations sur un aéronef dépourvu de l'invention.

De même, le plan antéropostérieur séparant transversalement un premier côté et un deuxième côté de l'aéronef, chaque pale se trouvant dans une position de « pale avançante » lorsque cette pale évolue dans le premier côté et se trouvant dans une position de « pale reculante » lorsque cette pale évolue dans le deuxième côté, pour chaque section ladite protubérance étant disposée de part et d'autre d'un plan en élévation de symétrie, un plan tangentiel étant tangent à ladite structure dans le premier côté, le plan tangentiel ainsi que le plan en élévation et le plan antéropostérieur étant parallèles entre eux, le plan en élévation est séparé transversalement du plan tangentiel par une distance d'écartement comprise entre 0.15 fois l'épaisseur maximale de la section inclus et 0.85 fois l'épaisseur maximale de la section inclus.

Cette localisation latérale peut être variable selon la longueur de la poutre, et peut varier d'une protubérance à une autre dans le cadre d'une poutre de queue comprenant plusieurs protubérances.

On entend par « 0.15 fois l'épaisseur maximale de la section inclus », « 0.85 fois l'épaisseur maximale de la section inclus » que ladite distance d'écartement peut atteindre ces produits.

L'invention et ses avantages apparaîtront avec plus de détails dans le cadre de la description qui suit avec des exemples donnés à titre illustratif en référence aux figures annexées qui représentent :

- la figure 1, une vue schématique d'un aéronef selon l'invention muni d'une poutre de queue comprenant une protubérance,

- la figure 2, une section de cette poutre de queue,

- les figures 3, 4, 5 et 6, des schémas présentant divers profils d'une protubérance,

- les figures 7, 8 et 9, des schémas présentant des protubérances présentant diverses hauteurs,

- la figure 10, un schéma présentant un système de fixation muni d'un moyen de déplacement,

- la figure 11, un schéma présentant une poutre de queue comprenant deux protubérances,

- la figure 12, un schéma illustrant le sillage d'un flux d'air en aval d'une poutre de queue de l'état de la technique dépourvue de l'invention, et

- la figure 13, un schéma illustrant le sillage d'un flux d'air en aval d'une poutre de queue comprenant l'invention.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Les termes « transversal » et « latéral » sont relatifs à toute direction parallèle à la deuxième direction Y.

Enfin, la troisième direction Z est dite en élévation. L'expression « en élévation » est relative à toute direction parallèle à la troisième direction Z.

Le plan défini par la première direction X et la troisième direction Z est un plan antéropostérieur en élévation de symétrie de certains organes décrits.

Le plan défini par la deuxième direction Y et la troisième direction Z est un plan vertical transversal orthogonal à la première direction X.

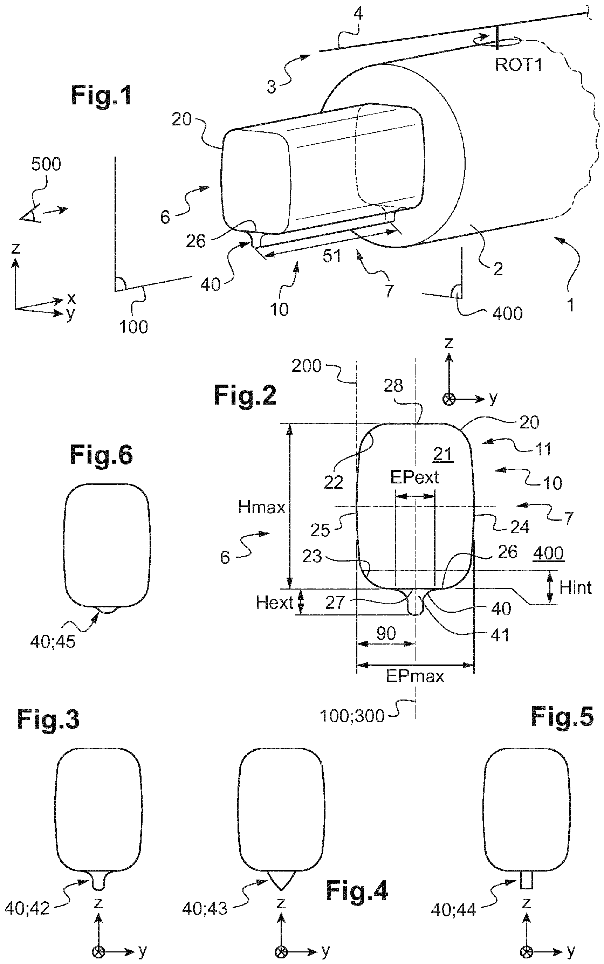

La figure 1 présente un aéronef 1 selon l'invention.

Cet aéronef comporte une cellule centrale 2. La cellule centrale 2 porte un rotor de sustentation 3 muni d'une pluralité de pales 4. L'aéronef est donc un giravion.

Par ailleurs, l'aéronef 1 comporte une poutre de queue 10 munie d'une structure allongée s'étendant longitudinalement à partir de la cellule centrale 2 le long d'un plan antéropostérieur 100. La poutre de queue 10 comporte éventuellement une structure tubulaire.

Le plan antéropostérieur est un plan en élévation de symétrie de la structure allongée et de la cellule centrale.

Ce plan antéropostérieur 100 sépare un premier côté 6 d'un deuxième côté 7 de l'aéronef 1. Lorsque les pales 4 sont dans une position de pale avançante, ces pales évoluent dans le premier côté 6. A l'inverse, lorsque les pales 4 sont dans une position de pale reculante, ces pales évoluent dans le deuxième côté 7.

Pour mémoire, une pale se déplaçant selon le sens d'avancement vers l'avant de l'aéronef est dite « pale avançante », alors qu'une pale se déplaçant selon le sens contraire au sens d'avancement est dite « pale reculante ». Le sens d'avancement de l'aéronef va de la poutre de queue vers la cellule centrale selon une direction longitudinale.

Par conséquent et selon l'exemple représenté, si le rotor de sustentation 3 effectue une rotation dans le sens dextrorsum ROT1, le premier côté 6 correspond au côté de gauche de l'aéronef pour un observateur 500 observant l'aéronef de l'arrière vers l'avant de cet aéronef.

La poutre de queue 10 comporte alors une structure 20. Cette structure 20 s'étendant longitudinalement selon une direction longitudinale X le long du plan antéropostérieur 100 à partir de la cellule centrale 2 sur une longueur 51.

Par ailleurs, la poutre de queue comporte au moins une protubérance 40 pour diminuer la déportance de la poutre de queue.

Chaque protubérance 40 prolonge alors la structure 20 vers le bas. Autrement dit, la protubérance 40 est reliée à la structure 20, en étant agencée sous la structure 20. Chaque protubérance peut être creuse en comprenant une paroi délimitant une enceinte creuse.

Cette protubérance 40 présente des dimensions inférieures aux dimensions de la structure 20. De plus, cette protubérance 40 est accolée à la structure 20, aucun passage d'air séparant la structure 20 de la protubérance 40.

La protubérance schématisée s'étend alors sous toute la longueur 51 de la structure 20.

Toutefois, la protubérance peut s'étendre partiellement sous la structure 20.

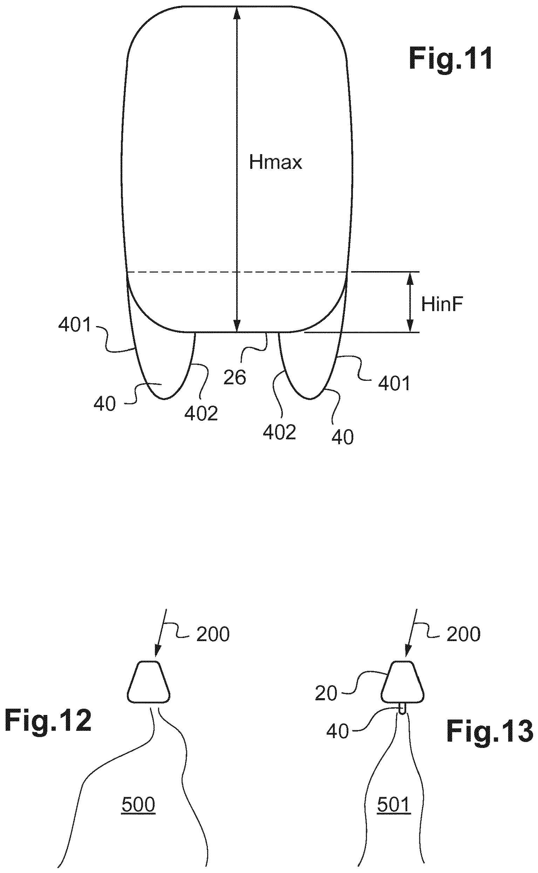

En outre, les figures 1 à 10 présentent une unique protubérance. Néanmoins et en référence à la figure 11, la poutre de queue peut présenter plusieurs protubérances, par exemple deux protubérances disposées latéralement l'une à côté de l'autre.

La figure 2 présente une section 11 de la poutre de queue. Chaque section 11 de la poutre de queue est alors contenue dans plan vertical 400 orthogonal à la direction longitudinale X, et au plan antéropostérieur 100.

Chaque section 11 de la poutre de queue peut être décomposée en une tranche principale 21 de la poutre de queue, et une tranche d'extension 41 de la protubérance 40.

Dès lors, la tranche principale 21 s'étend en élévation vers le bas d'un sommet 28 d'une zone supérieure 22 vers un culot 27 d'une zone inférieure 23. De plus la tranche principale s'étend latéralement d'un premier flanc 25 vers un deuxième flanc 24.

La hauteur séparant deux points de la périphérie de la poutre de queue selon un plan parallèle au plan antéropostérieur varie ente un minimum et un maximum dénommé « hauteur maximale « Hmax ». Selon l'exemple représenté, la hauteur maximale Hmax est atteinte au niveau du plan antéropostérieur.

Dès lors, la zone inférieure s'étend en élévation vers le haut à partir d'une face plane 26 du culot sur une hauteur dite « hauteur inférieure Hinf » qui est inférieure à 15 % de la hauteur maximale Hmax.

La distance séparant deux points de la périphérie de la poutre de queue selon un plan orthogonal au plan antéropostérieur et au plan de la section varie entre un minimum et un maximum dénommé « épaisseur maximale EPmax ». Selon l'exemple représenté, l'épaisseur maximale EPmax est atteinte à la jonction médiane entre la zone supérieure et la zone inférieure.

Dès lors, la poutre de queue présente favorablement une épaisseur relative supérieure ou égale à 0.5, cette épaisseur relative étant égale à un quotient de l'épaisseur maximale EPmax et de la hauteur maximale Hmax.

En outre et indépendamment du nombre de protubérance, la tranche d'extension 41 d'une protubérance est accolée à la zone inférieure 23.

Cette tranche d'extension 41 s'étend en élévation à partir d'une surface 26 de la zone inférieure 23 vers le bas. Par exemple une telle surface est une surface plane 26.

La hauteur séparant un point de ladite surface d'un point de de la périphérie d'une protubérance selon un plan parallèle au plan antéropostérieur varie ente un minimum et un maximum dénommé « hauteur d'extension Hext ». Selon l'exemple représenté, la hauteur d'extension Hext est atteinte au niveau du plan antéropostérieur.

Cette hauteur d'extension Hext est alors comprise entre 0.05 fois l'épaisseur maximale EPmax inclus d'une section et 0.5 fois l'épaisseur maximale EPmax inclus de cette section conformément à la relation suivante :

$$0.05 * EPmax \leq Hext \leq 0.5 * EPmax$$

où « * » représente le signe de la multiplication.

La hauteur d'extension Hext est favorablement comprise entre 0.05 fois l'épaisseur maximale EPmax inclus et 0.1 fois l'épaisseur maximale EPmax.

La distance séparant deux points de la périphérie d'une protubérance selon un plan orthogonal au plan antéropostérieur et au plan de la section varie entre un minimum et un maximum dénommé « épaisseur d'extension EPext ». Selon l'exemple représenté, l'épaisseur maximale EPmax est atteinte à la jonction de la protubérance 40 et de la structure 20.

Cette épaisseur d'extension EPext est alors comprise entre 0 et 0.4 fois l'épaisseur maximale EPmax inclus de cette section conformément à la relation suivante :

$$0 < EPext \leq 0.4 * EPmax$$

où « * » représente le signe de la multiplication.

Par ailleurs, une protubérance 40 peut être agencée dans le premier côté 6 de l'aéronef dans lequel évoluent les pales avançantes.

Selon une autre variante, une protubérance est positionnée transversalement par rapport à un plan tangentiel 200. Ce plan tangentiel 200 est tangent à la structure 20 dans le premier côté 6, le plan tangentiel 200 étant de plus parallèle au plan antéropostérieur 100.

Par ailleurs, un plan en élévation 300 de symétrie d'une protubérance est parallèle au plan tangentiel 200 et au plan antéropostérieur 100.

Dès lors, le plan en élévation 300 est séparé transversalement du plan tangentiel 200 par une distance d'écartement 90 comprise entre 0.15 fois l'épaisseur maximale EPmax de la section inclus et 0.85 fois l'épaisseur maximale EPmax de la section inclus soit :

$$0.15 * EPmax \leq distance\ d'écartement \leq 0.85 * EPmax$$

où « * » représente le signe de la multiplication.

Par ailleurs et en référence à la figure 3, une protubérance 40 peut avoir dans chaque section la forme d'une courbe de Gauss 42. Autrement dit, une peau de la protubérance décrit une courbe de Gauss.

En référence à la figure 4, une protubérance 40 peut avoir dans chaque section la forme d'un triangle 43.

En référence à la figure 5, une protubérance 40 peut avoir dans chaque section la forme d'un rectangle 44.

En référence à la figure 6, une protubérance 40 peut avoir dans chaque section la forme d'une sinusoïde 45.

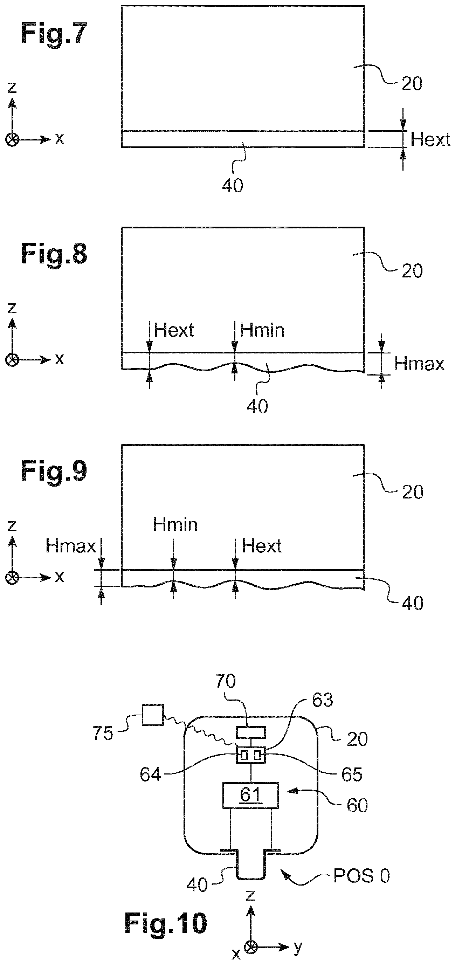

Selon un premier mode de réalisation et en référence à la figure 7, la hauteur d'extension Hext d'une protubérance 40 est constante le long de la longueur de ladite structure 20.

Toutes les sections la protubérance sont alors par exemple identiques.

Selon un deuxième mode de réalisation et en référence aux figures 8 et 9, la hauteur d'extension Hext d'une protubérance 40 est variable le long de la longueur de la structure.

Selon la figure 8 la hauteur d'extension Hext diminue linéairement à partir d'un maximum Hmax jusqu'à un minimum Hmin, puis augmente linéairement jusqu'au maximum Hmax.

Une telle loi confère à la protubérance la forme de triangle vu d'un côté de l'aéronef.

Selon la figure 9, la hauteur d'extension Hext évolue selon une loi sinusoïdale.

Selon ce deuxième mode de réalisation, deux sections adjacentes peuvent avoir des dimensions proportionnelles voire homothétiques par exemple.

Par ailleurs, une protubérance 40 peut être une partie constitutive de la structure 20. Néanmoins, la protubérance 40 peut être un profilé rapporté et fixé contre une surface de la structure 20.

En référence à la figure 10, une protubérance peut être mobile afin de pouvoir être rétractée dans la structure 20.

Ainsi, la protubérance 40 est attachée à la structure 20 par un système de fixation 60.

Ce système de fixation 60 comporte un moyen de déplacement 61, tel qu'un moteur électrique voire un vérin hydraulique ou pneumatique.

De plus, le système de fixation peut comporter une unité de traitement 63. Cette unité de traitement est par exemple munie d'une mémoire non volatile 64 et d'un processeur 65. Eventuellement, l'unité de traitement comporte un microcontrôleur.

L'unité de traitement 63 communique alors avec le moyen de déplacement 61.

En effet, cette unité de traitement peut commander le moyen de déplacement pour :

- soit positionner la protubérance dans la position de la figure 10, correspondant à une position sortie POS0 dans laquelle la protubérance saille de la structure 20,

- soit positionner la protubérance dans une position rentrée non représentée dans laquelle la protubérance ne saille pas de la structure 20.

Par ailleurs, cette unité de traitement peut être reliée à un moyen de manoeuvre 75 actionnable manuellement.

Ce moyen de manoeuvre permet par exemple à un opérateur de positionner la protubérance dans sa position rentrée ou sa position sortie. Un tel moyen de manoeuvre peut être un sélecteur comportant au moins deux emplacements, à savoir un emplacement ordonnant le positionnement de la protubérance dans la position rentrée ainsi qu'un un emplacement ordonnant le positionnement de la protubérance dans la position sortie. Ce moyen de manoeuvre peut aussi requérir l'immobilisation de la protubérance voire un fonctionnement automatique du dispositif.

En outre, l'unité de traitement 63 peut communiquer avec un système de mesure 70 permettant de déterminer la phase de vol en cours.

L'unité de traitement peut alors commander automatiquement le moyen de déplacement en fonction de la phase de vol courante. Par exemple, l'unité de traitement 63 peut exécuter des instructions stockées dans la mémoire non volatile 64 pour positionner automatiquement la protubérance 40 dans la position rentrée au sol et durant une phase de vol latéral.

En référence à la figure 11, la poutre de queue peut comprendre deux protubérances 40.

Chaque protubérance peut comporter une surface dite « surface externe 401 » prolongeant un flanc de la structure et une surface dite « surface interne 402 » reliée à la face plane 26 du culot.

Les protubérances sont éventuellement disposées latéralement de part et d'autre du plan antéropostérieur.

Indépendamment de la réalisation, l'ajout d'au moins une protubérance et notamment d'une unique protubérance selon l'invention permet de contrôler de manière efficace le flux d'air provenant d'un rotor de sustentation et impactant la poutre de queue.

Pour illustrer cet aspect, la figure 12 illustre un flux d'air 200 provenant d'un rotor. De plus, la figure 12 illustre le sillage 500 du flux d'air en aval d'une poutre de queue de l'état de la technique.

Ce sillage 500 bat fortement en aval de la poutre de queue. De plus, ce sillage 500 présente une intensité et des dimensions importantes.

A l'inverse, la figure 13 illustre le sillage 501 d'un flux d'air en aval d'une poutre de queue comprenant l'invention.

Chaque protubérance permet de limiter le phénomène de battement du flux d'air en aval de la poutre de queue et tend à réduire l'intensité et les dimensions du sillage 501 du flux d'air en aval de la poutre de queue.

Bien que la description des figures fasse référence à une protubérance, les caractéristiques décrites peuvent s'appliquer à plusieurs protubérances dans le cadre d'une poutre de queue présentant au moins deux protubérances. Les protubérances d'une même poutre de queue peuvent en outre posséder des caractéristiques identiques, ou variant d'une protubérance à une autre.

**Revendications**

1. Poutre de queue (10) destinée à un aéronef (1) muni d'une cellule centrale (2) portant au moins un rotor de sustentation (3), ladite poutre de queue étant munie d'une structure (20) allongée s'étendant selon une direction longitudinale (X) sur une distance dite « longueur (51) » le long d'un plan antéropostérieur (100) de symétrie de ladite structure allongée, ladite structure (20) s'étendant de haut en bas d'un sommet vers un culot (27) comprenant une surface plane,

**caractérisée en ce que** ladite poutre de queue (10) comporte au moins une protubérance (40), chaque protubérance (40) prolongeant vers le bas ledit culot (27) pour diminuer la déportance de la poutre de queue (10), chaque protubérance (40) étant solidaire de ladite structure (20) en s'étendant sous cette structure (20) selon ladite direction longitudinale (X), aucun passage d'air séparant ladite protubérance (40) de cette structure (20), au moins une section (11) de la poutre de queue (10) contenue dans un plan vertical (400) orthogonal à ladite direction longitudinale (X) présentant :

- une tranche de ladite structure (20) dite « tranche principale (21) » qui s'étend en élévation vers le bas du sommet (28) vers ledit culot (27) sur une distance atteignant un maximum dénommé « hauteur maximale (Hmax) », et qui s'étend latéralement d'un deuxième flanc (24) vers un premier flanc (25) sur une distance atteignant un maximum dénommé « épaisseur maximale (EPmax) »,
- une tranche de chaque protubérance (40) dite « tranche d'extension (41) » étant accolée à une zone inférieure (23) de ladite structure (20), ladite zone inférieure s'étendant en élévation vers le haut à partir de ladite surface plane sur une hauteur dite « hauteur inférieure (Hinf) » qui est inférieure à 15 % de la hauteur maximale (Hmax), la tranche d'extension (41) s'étendant en élévation vers le bas sur une distance atteignant un maximum dénommé « hauteur d'extension (Hext) » et latéralement sur une distance atteignant un maximum dénommé « épaisseur d'extension (EPext) », ladite hauteur d'extension (Hext) étant comprise entre 0.05 fois l'épaisseur maximale (EPmax) inclus et 0.5 fois l'épaisseur maximale (EPmax) inclus de cette section, ladite épaisseur d'extension (EPext) étant comprise entre 0 exclu et 0.4 fois l'épaisseur maximale (EPmax) inclus de cette section, ladite hauteur d'extension d'au moins une protubérance (40) étant variable le long de la longueur de ladite structure.

2. Poutre de queue selon la revendication 1,
**caractérisée en ce que** chaque tranche principale présente une épaisseur relative supérieure ou égale à 0.5, ladite épaisseur relative étant égale à un quotient de ladite épaisseur maximale (EPmax) et de ladite hauteur maximale (Hmax).

3. Poutre de queue selon l'une quelconque des revendications 1 à 2,
**caractérisée en ce qu'**au moins une protubérance (40) est solidaire de ladite structure (20), ladite structure (20) et ladite protubérance (40) appartenant à une même enveloppe structurelle.

4. Poutre de queue selon l'une quelconque des revendications 1 à 3,
**caractérisée en ce qu'**au moins une protubérance (40) est liée à ladite structure (20) par un système de fixation (60), ledit système de fixation (60) comprenant un moyen de déplacement (61) en élévation pour masquer ladite protubérance (40) sur requête dans ladite structure (20) dans une position dite « position rentrée » et pour sortir ladite protubérance sur requête en dehors de ladite structure dans une position dite « position sortie (POS0) », ladite protubérance (40) saillant de ladite structure (20) selon une hauteur égale à ladite hauteur d'extension (Hext) dans ladite position sortie (POS0).

5. Poutre de queue la revendication 4,
**caractérisée en ce que** ledit système de fixation (60) comporte une unité de traitement (63) reliée à un système de mesure (70) déterminant une phase de vol, ladite unité de traitement (63) exécutant des instructions stockées dans une mémoire non volatile (64) pour positionner automatiquement la protubérance (40) dans la position rentrée au sol et durant une phase de vol latéral.

6. Poutre de queue selon l'une quelconque des revendications 4 à 5,
**caractérisée en ce que** ledit système de fixation (60) comporte un moyen de manoeuvre (75) pour requérir manuellement le déplacement de la protubérance (40).

7. Poutre de queue selon l'une quelconque des revendications 1 à 6,
**caractérisée en ce qu'**au moins une protubérance (40) a dans chaque section la forme d'une courbe de Gauss (42) ou d'un triangle (43) ou d'un rectangle (44) ou d'une sinusoïde (45).

8. Poutre de queue selon l'une quelconque des revendications 1 à 7,
**caractérisée en ce que** ladite hauteur d'extension (Hext) est comprise entre 0.05 fois l'épaisseur maximale (EPmax) inclus et 0.1 fois l'épaisseur maximale (EPmax).

9. Poutre de queue selon l'une quelconque des revendications 1 à 8,

**caractérisée en ce que** ladite poutre de queue comportant deux protubérances, chaque protubérance comporte une surface dite « surface externe » prolongeant un desdits flancs de la structure et une surface dite « surface interne » reliée à ladite surface plane.

**10.** Poutre de queue selon l'une quelconque des revendications 1 à 9,
**caractérisée en ce que** ladite poutre de queue comportant deux protubérances, lesdites protubérances sont disposées latéralement l'une en regard de l'autre ainsi que de part et d'autre dudit plan antéropostérieur.

**11.** Aéronef (1) muni d'une cellule centrale (2) portant au moins un rotor de sustentation (3) portant une pluralité de pales (4), ladite cellule centrale (2) étant prolongée par une poutre de queue (10) s'étendant le long d'un plan antéropostérieur (100),
**caractérisée en ce que** ladite poutre de queue (10) est selon l'une quelconque des revendications 1 à 10.

**12.** Aéronef selon la revendication 11,
**caractérisée en ce que** ladite poutre de queue comportant une unique protubérance, ledit plan antéropostérieur (100) séparant transversalement un premier côté (6) et un deuxième côté (7) de l'aéronef (1), chaque pale (4) se trouvant dans une position de « pale avançante » lorsque cette pale évolue dans le premier côté (6) et se trouvant dans une position de « pale reculante » lorsque cette pale évolue dans le deuxième côté (7), ladite protubérance (40) est située dans le premier côté (6).

**13.** Aéronef selon la revendication 11,
**caractérisée en ce que** ledit plan antéropostérieur (100) séparant transversalement un premier côté (6) et un deuxième côté (7) de l'aéronef (1), chaque pale (4) se trouvant dans une position de « pale avançante » lorsque cette pale évolue dans le premier côté (6) et se trouvant dans une position de « pale reculante » lorsque cette pale évolue dans le deuxième côté (7), pour chaque section ladite protubérance (40) étant disposée de part et d'autre d'un plan en élévation (300) de symétrie de la protubérance, un plan tangentiel (200) étant tangent à ladite structure (20) dans le premier côté (6), le plan tangentiel (200) ainsi que le plan en élévation (300) et le plan antéropostérieur (100) étant parallèles entre eux, ledit plan en élévation (300) est séparé transversalement du plan tangentiel (200) par une distance d'écartement (90) comprise entre 0.15 fois l'épaisseur maximale (EPmax) de la section inclus et 0.85 fois l'épaisseur maximale (EPmax) de la section inclus.

## Patentansprüche

**1.** Heckausleger (10) für ein Luftfahrzeug (1), das eine zentrale Zelle (2) aufweist, die mindestens einen Hubrotor (3) trägt, wobei der Heckausleger eine langgestreckte Struktur (20) aufweist, die sich in Längsrichtung (X) über eine als "Länge (51)" bezeichnete Entfernung entlang einer antero-posterioren Symmetrieebene (100) der langgestreckten Struktur erstreckt, wobei sich die Struktur (20) von oben nach unten von einem Scheitel zu einer Basis (27) erstreckt, die eine ebene Oberfläche aufweist,
**dadurch gekennzeichnet, dass** der Heckausleger (10) mindestens einen Vorsprung (40) aufweist, wobei jeder Vorsprung (40) die Basis (27) nach unten verlängert, um den Versatz des Heckauslegers (10) zu verringern, wobei jeder Vorsprung (40) mit der Struktur (20) fest verbunden ist, indem er sich unter dieser Struktur (20) in Längsrichtung (X) erstreckt und kein Luftdurchgang den Vorsprung (40) von der Struktur (20) trennt, wobei mindestens ein Querschnitt (11) des Heckauslegers (10), der in einer zu der Längsrichtung (X) senkrechten vertikalen Ebene (400) liegt, folgendes aufweist:
eine als "Hauptscheibe (21)" bezeichnete Scheibe der Struktur (20), die sich in der Höhe nach unten vom Scheitel (28) zur Basis (27) über einen Abstand erstreckt, der ein als "maximale Höhe (Hmax)" bezeichnetes Maximum erreicht, und sich seitwärts von einer zweiten Flanke (24) zu einer ersten Flanke (25) über einen Abstand erstreckt, der ein als "maximale Dicke (EPmax)" bezeichnetes Maximum erreicht,

- eine als "Verlängerungsscheibe (41)" bezeichnete Scheibe jedes Vorsprungs (40), die an eine untere Zone (23) der Struktur (20) angefügt ist, wobei sich die untere Zone in der Höhe von der ebenen Oberfläche nach oben bis zu einer als "untere Höhe (Hinf)" bezeichneten Höhe erstreckt, die weniger als 15% der maximalen Höhe (Hmax) beträgt, wobei sich die Verlängerungsscheibe (41) in der Höhe nach unten über eine Entfernung erstreckt, die ein als "Verlängerungshöhe (Hext)" bezeichnetes Maximum erreicht, und sich seitwärts über eine Entfernung erstreckt, die ein als "Verlängerungsdicke (EPext)" bezeichnetes Maximum erreicht,

wobei die Verlängerungshöhe (Hext) zwischen dem 0.05-fachen, einschließlich, der maximalen Dicke (EPmax) dieses Querschnitts und dem 0,5-fachen, einschließlich, der maximalen Dicke (EPmax) dieses Querschnitts liegt, wobei die Verlängerungsdicke (EPext) zwischen 0 und dem 0,4-fachen, einschließlich, der maximalen Dicke (EPmax) dieses Querschnitts liegt, wobei die Verlängerungshöhe von mindestens einem Vorsprung (40) entlang der Länge der Struktur variabel ist.

2. Heckausleger nach Anspruch 1,
**dadurch gekennzeichnet, dass** jede Hauptscheibe eine relative Dicke größer oder gleich 0,5 aufweist, wobei die relative Dicke gleich einem Quotienten der maximalen Dicke (EPmax) und der maximalen Höhe (Hmax) ist.

3. Heckausleger nach einem der Ansprüche 1 bis 2,
**dadurch gekennzeichnet, dass** mindestens ein Vorsprung (40) mit der Struktur (20) fest verbunden ist, wobei die Struktur (20) und der Vorsprung (40) zu einer gleichen strukturellen Hülle gehören.

4. Heckausleger nach einem der Ansprüche 1 bis 3,
**dadurch gekennzeichnet, dass** mindestens ein Vorsprung (40) mit der Struktur (20) durch ein Befestigungssystem (60) verbunden ist, wobei das Befestigungssystem (60) ein Höhenverschiebungsmittel (61) umfasst, um den Vorsprung (40) auf Anforderung in der Struktur (20) in einer als "eingezogene Position" bezeichneten Position zu verbergen und den Vorsprung auf Anforderung aus der Struktur in eine als "ausgefahrene Position (POS0)" bezeichnete Position auszufahren, wobei in der in der ausgefahrenen Position (POS0) der Vorsprung (40) aus der Struktur (20) über eine Höhe, die der Verlängerungshöhe (Hext) entspricht, vorsteht.

5. Heckausleger nach Anspruch 4,
**dadurch gekennzeichnet, dass** das Befestigungssystem (60) eine Verarbeitungseinheit (63) umfasst, die mit einem Messsystem (70) zum Bestimmen einer Flugphase verbunden ist, wobei die Verarbeitungseinheit (63) in einem nichtflüchtigen Speicher (64) gespeicherte Anweisungen ausführt, um am Boden und während einer Seitwärtsflugphase den Vorsprung (40) automatisch in der eingefahrenen Position zu positionieren.

6. Heckausleger nach einem der Ansprüche 4 bis 5,
**dadurch gekennzeichnet, dass** das Befestigungssystem (60) ein Betätigungsmittel (75) zum manuellen Anfordern der Bewegung des Vorsprungs (40) umfasst.

7. Heckausleger nach einem der Ansprüche 1 bis 6,
**dadurch gekennzeichnet, dass** mindestens ein Vorsprung (40) in jedem Querschnitt die Form einer Gauß-Kurve (42) oder eines Dreiecks (43) oder eines Rechtecks (44) oder eines Sinusoids (45) aufweist.

8. Heckausleger nach einem der Ansprüche 1 bis 7,
**dadurch gekennzeichnet, dass** die Verlängerungshöhe (Hext) zwischen dem 0,05-fachen der maximalen Dicke (EPmax), einschließlich, und dem 0,1-fachen der maximalen Dicke (EPmax), einschließlich, liegt.

9. Heckausleger nach einem der Ansprüche 1 bis 8,
**dadurch gekennzeichnet, dass** der Heckausleger zwei Vorsprünge aufweist, wobei jeder Vorsprung eine als "Außenfläche" bezeichnete Oberfläche, die eine der Flanken der Struktur verlängert, und eine als "Innenfläche" bezeichnete Oberfläche aufweist, die mit der ebenen Oberfläche verbunden ist.

10. Heckausleger nach einem der Ansprüche 1 bis 9,
**dadurch gekennzeichnet, dass** der Heckausleger zwei Vorsprünge aufweist, wobei die Vorsprünge seitlich gegenüberliegend und auf beiden Seiten der antero-posterioren Ebene angeordnet sind.

11. Luftfahrzeug (1) mit einer zentralen Zelle (2), die mindestens einen Hubrotor (3) trägt, der eine Mehrzahl von Blättern (4) trägt, wobei die zentrale Zelle (2) durch einen Heckausleger (10) verlängert ist, der sich entlang einer antero-posterioren Ebene (100) erstreckt, **dadurch gekennzeichnet, dass** der Heckausleger (10) nach einem der Ansprüche 1 bis 10 ist.

12. Luftfahrzeug nach Anspruch 11, **dadurch gekennzeichnet, dass** der Heckausleger einen einzelnen Vorsprung aufweist, wobei die antero-posteriore Ebene (100) eine erste Seite (6) und eine zweite Seite (7) des Luftfahrzeugs (1) in Querrichtung trennt, wobei sich jedes Blatt (4) in einer "Vorwärts-Blatt"-Position befindet, wenn sich dieses Blatt auf der ersten Seite (6) bewegt, und in einer "Rückwärts-Blatt"- Position befindet, wenn sich dieses Blatt auf der zweiten Seite (7) bewegt, und wobei sich der Vorsprung (40) auf der ersten Seite (6) befindet.

**13.** Luftfahrzeug nach Anspruch 11,
**dadurch gekennzeichnet, dass** die antero-posteriore Ebene (100) eine erste Seite (6) und eine zweite Seite (7) des Luftfahrzeugs (1) in Querrichtung trennt, wobei sich jedes Blatt (4) in einer " Vorwärts-Blatt"-Position befindet, wenn sich dieses Blatt auf der ersten Seite (6) bewegt, und in einer " Rückwärts-Blatt"-Position befindet, wenn sich dieses Blatt auf der zweiten Seite (7) bewegt, dass in jedem Querschnitt der Vorsprung (40) auf beiden Seiten einer Höhenebene (300) der Symmetrie des Vorsprungs (40) angeordnet ist, wobei eine tangentiale Ebene (200) tangential zu der Struktur (20) auf der ersten Seite (6) ist, wobei die tangentiale Ebene (200) sowie die Höhenebene (300) und die anteroposteriore Ebene (100) parallel zueinander sind, wobei die Höhenebene (300) von der tangentialen Ebene (200) transversal durch einen Abstand (90) getrennt ist, der zwischen dem 0,15-fachen der maximalen Dicke (EPmax), einschließlich, und dem 0,85-fachen der maximalen Dicke (EPmax), einschließlich, liegt.

**Claims**

**1.** Tail boom (10) for an aircraft (1) provided with a central airframe (2) having at least one lift rotor (3), said tail boom being provided with an elongate structure (20) which extends in a longitudinal direction (X) over a distance referred to as the "length (51)" along an anteroposterior plane (100) of symmetry of said elongate structure, said structure (20) extending from top to bottom from a vertex to a base (27) which includes a planar surface, **characterised in that** said tail boom (10) comprises at least one protrusion (40), each protrusion (40) extending said base (27) downwards in order to reduce the negative lift of the tail boom (10), each protrusion (40) being rigidly connected to said structure (20) and extending beneath said structure (20) in said longitudinal direction (X), there being no air passage separating said protrusion (40) from said structure (20), at least one portion (11) of the tail boom (10) contained in a vertical plane (400) orthogonal to said longitudinal direction (X) having:

- an edge surface of said structure (20) which is referred to as the "main edge surface (21)" and extends in elevation downwards from the vertex (28) to said base (27) over a distance reaching a maximum referred to as the "maximum height (Hmax)", and which extends laterally from a second flank (24) to a first flank (25) over a distance reaching a maximum referred to as the "maximum thickness (EPmax)",
- an edge surface of each protrusion (40), referred to as the "extension edge surface (41)", being contiguous with a lower zone (23) of said structure (20), said lower zone extending in elevation upwards from said planar surface over a height referred to as the "lower height (Hinf)", which is less than 15% of the maximum height (Hmax), the extension edge surface (41) extending in elevation downwards over a distance reaching a maximum referred to as the "extension height (Hext)" and laterally over a distance reaching a maximum referred to as the "extension thickness (EPext)", said extension height (Hext) being between 0.05 times the maximum thickness (EPmax) inclusive and 0.5 times the maximum thickness (EPmax) inclusive of said portion, said extension thickness (EPext) being between 0 non-inclusive and 0.4 times the maximum thickness (EPmax) inclusive of said portion, said extension height of at least one protrusion (40) being variable along the length of said structure.

**2.** Tail boom according to claim 1, **characterised in that** each main edge surface has a relative thickness of no less than 0.5, said relative thickness being equal to a quotient of said maximum thickness (EPmax) and of said maximum height (Hmax).

**3.** Tail boom according to either claim 1 or claim 2, **characterised in that** at least one protrusion (40) is rigidly connected to said structure (20), said structure (20) and said protrusion (40) belonging to the same structural shell.

**4.** Tail boom according to any of claims 1 to 3, **characterised in that** at least one protrusion (40) is connected to said structure (20) by a fastening system (60), said fastening system (60) including a means (61) for movement in elevation for concealing, on request, said protrusion (40) in said structure (20) in a position referred to as the "retracted position", and for extracting, on request, said protrusion out of said structure into a position referred to as the "extracted position (POS0)", said protrusion (40) projecting from said structure (20) at a height equal to said extension height (Hext) in said extracted position (POS0).

**5.** Tail boom according to claim 4, **characterised in that** said fastening system (60) comprises a processing unit (63) connected to a measurement system (70) that determines a flight phase, said processing unit (63) executing instructions stored in a non-volatile memory (64) in order to automatically position the protrusion (40) in the retracted position on the ground and during a lateral flight phase.

**6.** Tail boom according to either claim 4 or claim 5, **characterised in that** said fastening system (60) comprises a control means (75) for manually requesting the movement of the protrusion (40).

7. Tail boom according to any of claims 1 to 6, **characterised in that** at least one protrusion (40) has the shape of a Gaussian curve (42) or a triangle (43) or a rectangle (44) or a sinusoid (45) in each portion.

8. Tail boom according to any of claims 1 to 7, **characterised in that** said extension height (Hext) is between 0.05 times the maximum thickness (EPmax) inclusive and 0.1 times the maximum thickness (EPmax).

9. Tail boom according to any of claims 1 to 8, **characterised in that**, said tail boom comprising two protrusions, each protrusion comprises a surface referred to as the "outer surface", which extends one of said flanks of the structure, and a surface referred to as the "inner surface", which is connected to said planar surface.

10. Tail boom according to any of claims 1 to 9, **characterised in that**, said tail boom comprising two protrusions, said protrusions are arranged laterally one facing the other either side of said anteroposterior plane.

11. Aircraft (1) provided with a central airframe (2) having at least one lift rotor (3) having a plurality of blades (4), said central airframe (2) being extended by a tail boom (10) extending along an anteroposterior plane (100), **characterised in that** said tail boom (10) is according to any of claims 1 to 10.

12. Aircraft according to claim 11, **characterised in that** said tail boom comprising a single protrusion, said anteroposterior plane (100) transversely separating a first side (6) and a second side (7) of the aircraft (1), each blade (4) being in an "advancing blade" position when said blade moves on the first side (6) and being in a "retreating blade" position when said blade moves on the second side (7), said protrusion (40) is located on the first side (6).

13. Aircraft according to claim 11, **characterised in that**, said anteroposterior plane (100) transversely separating a first side (6) and a second side (7) of the aircraft (1), each blade (4) being in an "advancing blade" position when said blade moves on the first side (6) and being in a "retreating blade" position when said blade moves on the second side (7), and, for each portion, said protrusion (40) being arranged on either side of an elevational plane (300) of symmetry of the protrusion, a tangential plane (200) being tangential to said structure (20) on the first side (6), the tangential plane (200) and the elevational plane (300) and the anteroposterior plane (100) being parallel to one another, said elevational plane (300) is transversely separated from the tangential plane (200) by a distance (90) of between 0.15 times the maximum thickness (EPmax) of the portion inclusive and 0.85 times the maximum thickness (EPmax) of the portion inclusive.

Fig.1

Fig.6

Fig.2

Fig.3

Fig.4

Fig.5

**Fig.7**

z
↑
⊗ → x

20

40

Hext

**Fig.8**

z
↑
⊗ → x

20

Hext | Hmin

Hmax

40

**Fig.9**

z
↑
⊗ → x

20

Hmax

Hmin | Hext

40

70

63

75

20

64

65

61

60

40

POS 0

z
↑
x ⊗ → y

**Fig.10**

**Fig.11**

Hmax

HinF

401

26

40

402

402

40

401

**Fig.12**

200

500

**Fig.13**

200

20

40

501

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8074920 B
- EP 524044 A
- US 6352220 B
- US 4708305 A
- US 20140166804 A
- US 5209430 A
- US 20050279879 A
- RU 2281227
- WO 2012039702 A
- US 2002079405 A

**Littérature non-brevet citée dans la description**

- **H.L. KELLEY ; C.A. CROWELT ; J.C. WILSON.** two-dimensional aerodynamic characteristics of several polygon-shaped cross-sectional models applicable to helicopter fuselages. *NASA TP3233,* 1992